(19) **Europäisches Patentamt**
**European Patent Office**
**Office européen des brevets**

(11) **EP 2 488 768 B1**

(12) **FASCICULE DE BREVET EUROPEEN**

(45) Date de publication et mention de la délivrance du brevet:
**07.12.2016 Bulletin 2016/49**

(21) Numéro de dépôt: **10781936.9**

(22) Date de dépôt: **14.10.2010**

(51) Int Cl.:
**F16C 19/10** *(2006.01)*     **B60G 15/06** *(2006.01)*
**F16F 9/00** *(2006.01)*

(86) Numéro de dépôt international:
**PCT/FR2010/000685**

(87) Numéro de publication internationale:
**WO 2011/045488 (21.04.2011 Gazette 2011/16)**

(54) **ROULEMENT A BILLES ET BUTEE DE SUSPENSION ASSOCIEE**

KUGELLAGER UND ZUGEHÖRIGER ANSCHLAGPUFFER

BALL BEARING AND CORRESPONDING BUMP STOP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2009 FR 0904977**

(43) Date de publication de la demande:
**22.08.2012 Bulletin 2012/34**

(73) Titulaire: **NTN-SNR Roulements**
**74000 Annecy (FR)**

(72) Inventeurs:
• **BRISSON, Sébastien**
**74130 Contamine sur Arve (FR)**

• **CHAMOUSSET, Antony**
**74150 Salles (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**EP-A1- 0 850 790     WO-A2-2009/019340**
**US-A- 4 552 467     US-A- 4 696 588**
**US-A- 5 782 564**

## Description

### DOMAINE TECHNIQUE DE L'INVENTION

L'invention se rapporte à une butée de suspension de véhicule, pourvue d'un roulement à billes.

### ETAT DE LA TECHNIQUE ANTERIEURE

L'utilisation de roulement à rondelles en tôle emboutie dans des butées de suspension est illustrée par exemple par le document FR2918138. Dans une telle butée, l'une des rondelles matérialisant les chemins de roulement, dite rondelle inférieure, est en appui sur un support plastique constituant une interface avec un ressort à boudin de suspension de la roue, l'autre rondelle, dite supérieure, étant en appui sous un couvercle fixé à la caisse du véhicule. Les chemins de roulement ont en coupe un profil en arc de cercle dont l'angle d'ouverture est de 60°. Le chemin de roulement de la rondelle inférieure est ouvert radialement vers l'intérieur et ne comporte pas de rebord qui puisse limiter radialement vers l'intérieur le mouvement des billes. Ceci ce traduit par le fait que l'arc de cercle du chemin de roulement de la rondelle inférieure n'est en aucun point tangent à un plan perpendiculaire à l'axe de symétrie de révolution du chemin de roulement. De manière analogue, le chemin de roulement de la rondelle supérieure est ouvert radialement vers l'extérieur et ne comporte pas de rebord qui puisse limiter radialement vers l'extérieur le mouvement des billes, ce qui se traduit géométriquement par le fait que l'arc de cercle du chemin de roulement de la rondelle supérieure n'est en aucun point tangent à un plan perpendiculaire à l'axe de symétrie de révolution du chemin de roulement supérieur. Or les sollicitations d'une telle butée sont multidirectionnelles et dissymétriques, ce qui se traduit par des contraintes très inégalement réparties entre les billes. Si la butée est sous-dimensionnée par rapport à ces sollicitations, on peut alors constater une ouverture du roulement et des mouvements radiaux des billes qui peuvent à l'extrême aboutir à une expulsion d'une bille. Le dysfonctionnement potentiel du roulement peut également se manifester par un broutage des billes avec des pertes d'adhérence subites interrompant le roulement de certaines des billes sur les chemins de roulement et provoquant des glissements engendrant des usures rapides. Par ailleurs, les pièces plastiques constituant l'appui ressort et le couvercle, si elles sont sous-dimensionnées, peuvent également subir des déformations et venir en contact l'une de l'autre, ce qui accentue le dysfonctionnement de la butée.

Le document US 4,696,588 A1 divulgue un roulement selon le préambule de la revendication 1.

### EXPOSE DE L'INVENTION

L'invention vise à remédier aux inconvénients de l'état de la technique et notamment à proposer un roulement présentant une rigidité renforcée ainsi qu'une meilleure résistance aux efforts radiaux.

Selon un premier aspect de l'invention, celle-ci a trait à un roulement selon l'invention du type général, comprenant : une rondelle inférieure formant un chemin de roulement inférieur, une rondelle supérieure présentant un chemin de roulement supérieur, et des billes roulant sur les chemins de roulement inférieur et supérieur pour assurer la rotation relative des rondelles supérieure et inférieure autour d'un axe géométrique de rotation du roulement.

Ici comme dans l'ensemble du texte de la demande, les expressions « rondelle inférieure » et « rondelle supérieure » sont utilisées par référence à une utilisation préférée du roulement selon l'invention, à savoir au sein d'une butée de suspension de véhicule, dans laquelle l'axe de rotation du roulement est proche de la verticale et la rondelle supérieure est disposée axialement au-dessus de la rondelle inférieure. Toutefois, hors de ce contexte, les termes « supérieur » et « inférieur » sont à comprendre comme une désignation arbitraire des rondelles.

Le roulement selon l'invention est plus spécifiquement du type à contact oblique, ce qui, dans le cadre de la présente demande, signifie que la géométrie du roulement est telle que dans tout plan de coupe contenant l'axe géométrique de rotation du roulement, le chemin de roulement inférieur forme un arc de cercle inférieur qui définit un centre de courbure axiale inférieur, le chemin de roulement supérieur forme un arc de cercle supérieur qui définit un centre de courbure axiale supérieur, les centres de courbure inférieur et supérieur étant situés sur un axe géométrique oblique faisant avec l'axe géométrique de rotation un angle d'oblicité de valeur comprise entre 5° et 65°, et de préférence entre 20° et 50°. Suivant un mode particulier de réalisation correspondant au dimensionnement d'une butée de suspension particulière, l'angle d'obliqité est de l'ordre de 35°.

Selon l'invention, la géométrie du chemin de roulement inférieur est caractérisée en ce que dans tout plan de coupe contenant l'axe géométrique de rotation du roulement, l'arc de cercle inférieur présente deux extrémités définissant un angle d'ouverture de valeur supérieure ou égale à 80° et une tangente située dans un plan inférieur perpendiculaire à l'axe de rotation en un point tangent inférieur définissant avec l'extrémité de l'arc de cercle inférieur la plus proche une portion de l'arc de cercle inférieur ayant un angle d'ouverture supérieur ou égal à 10°.

Le chemin de roulement inférieur est donc particulièrement enveloppant, ce qui permet de confiner radialement les billes. L'arc de cercle inférieur s'étendant de part et d'autre du point tangent inférieur, le chemin peut reprendre des efforts radiaux centrifuges et centripètes.

Dans la définition précédente, le roulement est considéré hors charge, l'axe de rotation du roulement étant confondu avec l'axe de symétrie de révolution du chemin de roulement inférieur et avec l'axe de symétrie de révolution du chemin de roulement supérieur.

Les chemins de roulement sont les surfaces des rondelles supérieure et inférieure destinées à être en contact avec les billes, et peuvent le cas échéant faire l'objet d'un traitement destiné à augmenter leur dureté, par exemple un traitement thermique. De manière connue, ils font également de préférence l'objet d'un traitement de surface de protection contre la corrosion et de rectification ou de superfinition visant à diminuer leur rugosité.

Préférentiellement, la géométrie du chemin de roulement supérieur est caractérisée en ce que dans tout plan de coupe contenant l'axe géométrique de rotation du roulement, l'arc de cercle supérieur présente deux extrémités définissant un angle d'ouverture de valeur supérieure ou égale à 80° et une tangente située dans un plan Supérieur perpendiculaire à l'axe de rotation en un point tangent Supérieur définissant avec l'extrémité de l'arc de cercle Supérieur la plus proche une portion de l'arc de cercle Supérieur ayant un angle d'ouverture supérieur ou égal à 10°.

Ainsi, le chemin de roulement supérieur est également particulièrement enveloppant, ce qui permet de confiner radialement les billes entre les deux rondelles.

Selon un mode de réalisation préféré, la rondelle inférieure est constituée d'une tôle, par exemple une tôle emboutie. Le chemin de roulement inférieur constitue une gorge profonde, mais compatible avec l'emboutissage.

Dans cette réalisation en tôle, la rondelle inférieure peut être pourvue d'une jupe inférieure cylindrique de rigidification.

De manière similaire, la rondelle supérieure peut également être constituée d'une tôle, par exemple une tôle emboutie et peut également être pourvue d'une jupe supérieure cylindrique de rigidification.

L'invention vise en outre une butée de suspension comprenant un roulement de butée tel que précédemment décrit, un moyen d'appui inférieur pour transmettre à la rondelle inférieure du roulement des efforts exercés par un ressort de suspension et un couvercle pour transmettre à la caisse du véhicule les efforts exercés par le ressort et passant par le roulement de butée.

Un tel montage permet d'éviter le problème de rotulage du roulement et simultanément les déformations des moyens d'appui inférieur et supérieur. La butée a un jeu radial réduit. La compacité axiale de l'ensemble est excellente.

Ainsi la présente invention, en rigidifiant le roulement et l'interface de celui-ci avec les moyens d'appui, évite que ces derniers ne se déplacent l'un par rapport à l'autre et/ou se déforment ; les jeux entre les moyens d'appui sont ainsi maîtrisés, notamment au niveau des chicanes entre les moyens d'appui inférieur et supérieur, améliorant ainsi l'étanchéité.

En particulier, l'architecture de la butée est compatible avec des moyens d'appui inférieur et/ou supérieur réalisés en une matière plastique, le cas échéant sans insert métallique.

Selon un mode particulier de réalisation, l'angle d'oblicité est ouvert vers le moyen d'appui inférieur. Cette disposition, qui correspond à la majorité des véhicules, permet un centrage de la butée à l'intérieur du couvercle.

Suivant un mode de réalisation particulièrement avantageux, la rondelle inférieure comporte une jupe inférieure cylindrique de rigidification formant une portée cylindrique inférieure en appui radial contre le moyen d'appui inférieur. La jupe inférieure contribue à la rigidification de la rondelle elle-même et à celle du sous-ensemble constitué avec le moyen d'appui inférieur.

De manière similaire, la rondelle supérieure peut comporter une jupe supérieure cylindrique de rigidification formant une portée cylindrique supérieure en appui radial contre le couvercle. Selon un mode préféré de réalisation, la jupe supérieure cylindrique fait saillie axialement vers le moyen d'appui inférieur et est préférentiellement au moins partiellement en regard et à distance de la jupe cylindrique inférieure. L'objectif est ici de réduire l'ouverture entre les rondelles, entre la jupe supérieure et la rondelle inférieure, de façon à créer une perte de charge ou un labyrinthe s'opposant à l'entrée de polluants dans le roulement.

**BREVE DESCRIPTION DES FIGURES**

D'autres caractéristiques, détails et avantages de l'invention ressortiront à la lecture de la description qui suit, en référence aux figures annexées, qui illustrent :

- la figure 1, une butée de suspension selon un mode de réalisation de l'invention ;
- la figure 2, une vue en coupe d'un roulement de la butée de la figure 1.

Pour plus de clarté, les éléments identiques ou similaires sont repérés par des signes de référence identiques sur l'ensemble des figures.

**DESCRIPTION DETAILLEE D'UN MODE DE REALISATION**

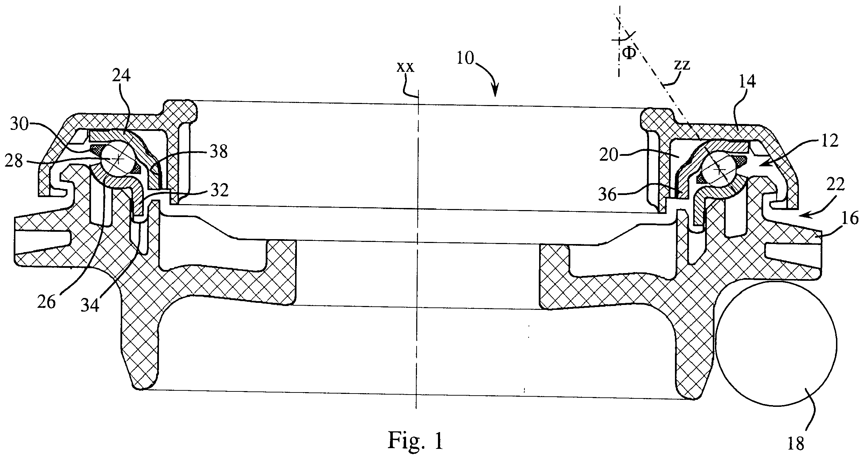

La figure 1 illustre une butée de suspension 10 comportant un roulement à billes 12 inséré entre un couvercle 14 constituant une interface avec la caisse du véhicule et une pièce d'appui inférieur 16 destinée à venir reposer, directement ou avec interposition d'un anneau élastomère d'amortissement, sur la spire supérieure d'un ressort de suspension hélicoïdal 18. Le couvercle 14 et la pièce d'appui inférieur 16 sont en matière plastiques. Leurs formes définissent un logement annulaire 20 pour le roulement 12, qui s'ouvre sur l'extérieur par une chicane 22.

Le roulement 12 est constitué d'une rondelle supérieure 24 fixée au couvercle 14, d'une rondelle inférieure 26 en appui sur la pièce d'appui inférieur 16, les rondelles définissant entre elles un volume annulaire dans lequel sont logées des billes 28 retenues le cas échéant par une cage 30.

Chacune des rondelles 24, 26 est constituée d'une tôle, formée de préférence par emboutissage.

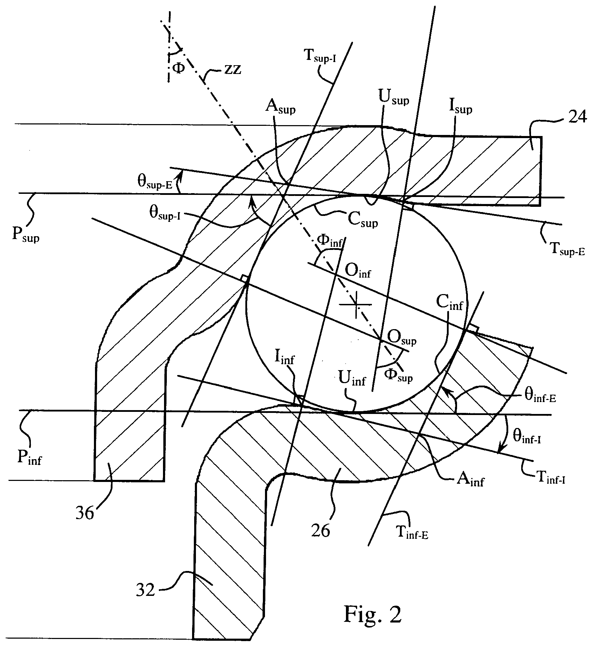

Sur la rondelle inférieure 26 est défini un chemin de roulement inférieur, qui de manière connue est une surface de révolution dont la génératrice est, dans le plan de coupe des figures 1 et 2, un arc de cercle $C_{Inf}$ de rayon plus grand que le rayon des billes. De même est défini sur la rondelle supérieure 24 un chemin de roulement supérieur constituant une surface de révolution dont la génératrice est un arc de cercle $C_{Sup}$ de rayon plus grand que le rayon des billes. Après montage, et lorsque le roulement est au repos, l'axe de symétrie de révolution de la rondelle inférieure, l'axe de symétrie de révolution de la rondelle supérieure et l'axe de rotation du roulement (XX) sont destinés à être confondus. Dans les considérations géométriques qui vont suivre, on supposera cette condition remplie.

Le roulement 12 étant à contact oblique, les centres de courbure $O_{Sup}$ et $O_{Inf}$ des deux arcs de cercles du chemin de roulement supérieur et du chemin de roulement inférieur sont situés, dans un plan axial de coupe, sur un axe (ZZ) oblique par rapport à l'axe de rotation du roulement. Par symétrie de révolution, les centres de courbures $O_{Sup}$ et $O_{Inf}$ sont également situés sur un cône dont la génératrice est l'axe oblique précédent, ce cône contenant également les centres des billes et le cercle primitif défini par les centres des billes. Dans l'exemple de réalisation, l'axe oblique fait avec l'axe de rotation du roulement un angle $\Phi$ ouvert vers le bas de 35°, qui est le demi-angle d'ouverture du cône mentionné précédemment.

De manière remarquable, l'arc de cercle $C_{Inf}$ du chemin de roulement inférieur a un angle d'ouverture $\Phi_{inf}$ important, d'au moins 80°. Ceci permet un enveloppement important des billes. L'extrémité radiale intérieure de l'arc de cercle $C_{Inf}$ constitue un point d'inflexion $I_{Inf}$ du profil de la surface intérieure de la rondelle inférieure 26.

De manière remarquable également, il est possible de tracer une tangente à l'arc de cercle $C_{Inf}$ qui est perpendiculaire à l'axe de symétrie de révolution de la rondelle. Le plan perpendiculaire à l'axe de symétrie de révolution de la rondelle et contenant cette tangente sera noté dans la suite $P_{Inf}$. Le point d'intersection entre le plan $P_{Inf}$ et l'arc $C_{Inf}$ sera noté $U_{Inf}$.

Si l'on trace la tangente $T_{Inf\_E}$ à l'arc de cercle du chemin de roulement inférieur située à l'extrémité radiale extérieure de la rondelle, on constate que cette tangente fait un angle positif important $\theta_{Inf\_E}$ avec le plan de référence $P_{Inf}$. A l'autre extrémité de l'arc de cercle du chemin de roulement inférieur, du côté radialement interne par rapport à l'axe de rotation, la tangente $T_{Inf\_I}$ à l'arc de cercle est orientée d'un angle négatif faible $\theta_{Inf\_I}$ par rapport au plan de référence $P_{Inf}$. L'angle $\theta_{Inf\_I}$

est également la mesure de la portion de l'arc $C_{Inf}$ comprise entre les points $I_{Inf}$ et $U_{Inf}$. Par construction, les angles ainsi définis vérifient :

$$\Phi_{inf} = \theta_{Inf\_E} - \theta_{Inf\_I}$$

De manière remarquable également, les deux tangentes $T_{Inf\_E}$ et $T_{Inf\_I}$ sont sécantes en un point $A_{Inf}$ situé du côté du plan $P_{Inf}$ opposé à l'arc de cercle $C_{Inf}$ du chemin de roulement inférieur.

Pour assurer un enveloppement optimal des billes, les angles $\theta_{Inf\_I}$ et $\theta_{Inf\_E}$ doivent être, en valeur absolue, les plus grands possibles, et vérifier les inégalités suivantes :

$$\theta_{Inf\_I} < -10°$$

$$\theta_{Inf\_E} > +60°$$

$$\Phi_{inf} = \theta_{Inf\_E} - \theta_{Inf\_I} \geq 80°$$

La rondelle 26 se prolonge radialement vers le bas par une jupe cylindrique 32. Comme on le voit sur la figure 1, cette jupe cylindrique 32 est en appui radial contre une portée cylindrique 34 de la pièce d'appui inférieur 16. La jupe cylindrique 32 augmente le moment d'inertie de la rondelle inférieure 26 et contribue à sa rigidification, notamment dans les modes de déformation en torsion et en flexion. Par ailleurs, la jupe cylindrique 32 contribue à la rigidification du sous-ensemble constitué par la rondelle inférieure 26 et par la pièce d'appui inférieur 16.

Le profil spécifique du chemin de roulement supérieur peut être décrit par des considérations géométriques similaires.

Comme pour la rondelle inférieure, l'arc de cercle du chemin de roulement de la rondelle supérieure 24 a un angle d'ouverture $\Phi_{sup}$ important, d'au moins 80°. Ceci permet un enveloppement important des billes 28. L'extrémité radiale extérieure de l'arc de cercle $C_{Sup}$ constitue un point d'inflexion $I_{Sup}$ du profil de la surface intérieure de la rondelle supérieure 24.

De manière remarquable également, il est possible de tracer une tangente à l'arc de cercle $C_{Sup}$ qui soit perpendiculaire à l'axe de symétrie de révolution de la rondelle supérieure 24. Le plan perpendiculaire à l'axe de symétrie de révolution de la rondelle supérieure 24 et contenant cette tangente sera noté dans la suite $P_{Sup}$. Le point d'intersection entre le plan $P_{Sup}$ et l'arc $C_{Sup}$ sera noté $U_{Sup}$.

Si l'on trace la tangente $T_{Sup\_E}$ à l'arc de cercle

$C_{Sup}$ du chemin de roulement supérieur située à l'extrémité radiale extérieure de la rondelle, on constate que cette tangente fait un angle $\theta_{Sup\_E}$ avec le plan de référence $P_{Sup}$. A l'autre extrémité de l'arc de cercle du chemin de roulement supérieur, du côté radialement interne par rapport à l'axe de rotation, la tangente $T_{Sup\_I}$ à l'arc de cercle est orientée d'un angle $\theta_{Sup\_I}$ par rapport au plan de référence $P_{Sup}$. L'angle $\theta_{Sup\_I}$ est également la mesure de la portion de l'arc $C_{Sup}$ comprise entre les points $I_{Sup}$ et $U_{Sup}$. Par construction, les angles ainsi définis vérifient :

$$\Phi_{sup} = \theta_{Sup\_I} - \theta_{Sup\_E}$$

De manière remarquable également, les deux tangentes $T_{Sup\_E}$ et $T_{Sup\_I}$ sont sécantes en un point $A_{Sup}$ situé du côté du plan $P_{Sup}$ opposé à l'arc de cercle $C_{Sup}$ du chemin de roulement supérieur.

Pour assurer un enveloppement optimal des billes, les angles $\theta_{Sup\_I}$ et $\theta_{Sup\_E}$ doivent être, en valeur absolue, les plus grands possibles. En pratique, on peut obtenir par emboutissage des angles vérifiant :

$$\theta_{Sup\_E} < -10°$$

$$\theta_{Sup\_I} > +60°$$

$$\Phi_{sup} = \theta_{Sup\_I} - \theta_{Sup\_E} \geq 80°$$

L'extrémité radiale intérieure de l'arc de cercle $C_{Sup}$ constitue un point d'inflexion du profil de la surface intérieure de la rondelle inférieure. La rondelle supérieure 24 se prolonge radialement vers le bas par une jupe cylindrique 36. Comme on le voit sur la figure 1, cette jupe cylindrique 36 est en appui radial contre une portée cylindrique 38 du couvercle 12. La jupe cylindrique 36 augmente le moment d'inertie de la rondelle supérieure 24 et contribue à sa rigidification, notamment dans les modes de déformation en torsion et en flexion. Par ailleurs, la jupe cylindrique 36 contribue à la rigidification du sous-ensemble constitué par la rondelle supérieure 26 et par le couvercle 14. Par ailleurs, les deux jupes cylindriques 32, 36 délimitent un passage annulaire étroit constituant une perte de charge.

Pour que les chemins de roulement enveloppant assurent leur fonction de guidage de manière optimale, il est intéressant que chaque point de l'arc de cercle inférieur $C_{Inf}$ ait une image sur l'arc de cercle supérieur, c'est à dire un point symétrique par une symétrie centrale dont le centre le centre d'une bille. En pratique, cette condition est réalisée si les droites $T_{Sup\_E}$ et $T_{Inf\_I}$ sont parallèles ou forment un angle inférieur à 10°, et si de manière similaire, les droites $T_{Sup\_I}$ et $T_{Inf\_E}$ sont parallèle ou forment un angle inférieur à 10°.

Naturellement, diverses variations de forme ou de matière sont possibles, sans sortir du cadre défini par les revendications.

## Revendications

1. Roulement comprenant

- une rondelle inférieure (26) formant un chemin de roulement inférieur,
- une rondelle supérieure (24) formant un chemin de roulement supérieur,
- des billes (28) roulant sur les chemins de roulement inférieur et supérieur pour assurer la rotation relative des rondelles supérieure (24) et inférieure (26) autour d'un axe géométrique de rotation (XX) du roulement,

la géométrie du roulement étant telle que dans tout plan de coupe contenant l'axe géométrique de rotation du roulement (XX), le chemin de roulement inférieur forme un arc de cercle inférieur ($C_{Inf}$) qui définit un centre de courbure axiale inférieur ($O_{Inf}$), le chemin de roulement supérieur forme un arc de cercle supérieur ($C_{Sup}$) qui définit un centre de courbure axiale supérieur ($O_{sup}$), **caractérisé en ce que** les centres de courbure inférieur et supérieur définissent un axe géométrique oblique (ZZ) faisant avec l'axe géométrique de rotation (XX) un angle d'obliçité ($\Phi$) de valeur comprise entre 5° et 65°, et dans tout plan de coupe contenant l'axe géométrique de rotation du roulement, l'arc de cercle inférieur ($C_{Inf}$) présente deux extrémités définissant un angle d'ouverture ($\Phi_{inf}$) de valeur supérieure ou égale à 80° et une tangente située dans un plan inférieur ($P_{Inf}$) perpendiculaire à l'axe de rotation en un point tangent inférieur ($U_{Inf}$) définissant avec l'extrémité de l'arc de cercle inférieur la plus proche ($I_{inf}$) une portion de l'arc de cercle inférieur ($C_{Inf}$) ayant un angle d'ouverture ($\theta_{Inf\_I}$) supérieur ou égal à 10°.

2. Roulement selon la revendication 1, **caractérisé en ce que** dans tout plan de coupe contenant l'axe géométrique de rotation du roulement, l'arc de cercle supérieur ($C_{Sup}$) présente deux extrémités définissant un angle d'ouverture ($\Phi_{sup}$) de valeur supérieure ou égale à 80° et une tangente située dans un plan Supérieur ($P_{Sup}$) perpendiculaire à l'axe de rotation en un point tangent Supérieur ($U_{Sup}$) définissant avec l'extrémité de l'arc de cercle Supérieur la plus proche ($I_{Sup}$) une portion de l'arc de cercle Supérieur ($C_{Sup}$) ayant un angle d'ouverture ($\theta_{Sup\_E}$) supérieur ou égal à 10°.

3. Roulement selon l'une quelconque des revendications précédentes, **caractérisé en ce que** la rondelle inférieure (26) est constituée d'une tôle, par exemple une tôle emboutie.

**4.** Roulement selon la revendication 3, **caractérisé en ce que** la rondelle inférieure (26) est pourvue d'une jupe inférieure cylindrique de rigidification (32).

**5.** Roulement selon l'une quelconque des revendications précédentes, **caractérisé en ce que** la rondelle supérieure (24) est constituée d'une tôle, par exemple une tôle emboutie.

**6.** Roulement selon la revendication 5, **caractérisé en ce que** la rondelle supérieure est pourvue d'une jupe supérieure cylindrique de rigidification (36).

**7.** Butée de suspension (10) destinée à s'interposer entre un ressort de suspension (18) et la caisse d'un véhicule, la butée comprenant :

- un roulement (12) selon l'une quelconque des revendications précédentes,
- un moyen d'appui inférieur (16) pour transmettre à la rondelle inférieure du roulement des efforts exercés par un ressort de suspension,
- un couvercle (14) pour transmettre à la caisse du véhicule les efforts exercés par le ressort et passant par le roulement.

**8.** Butée selon la revendication 7, **caractérisée en ce que** le couvercle (14) et le moyen d'appui inférieur (16) sont constitués en une matière plastique.

**9.** Butée selon la revendication 7 ou la revendication 8, **caractérisée en ce que** l'angle d'oblicité est ouvert vers le moyen d'appui inférieur.

**10.** Butée selon l'une quelconque des revendications 7 à 9, **caractérisée en ce que** la rondelle inférieure (26) comporte une jupe inférieure cylindrique de rigidification (32) en appui radial contre le moyen d'appui inférieur (16).

**11.** Butée selon l'une quelconque des revendications 7 à 10, **caractérisée en ce que** la rondelle supérieure (24) comporte une jupe supérieure cylindrique de rigidification (36) en appui radial contre le couvercle (14).

**12.** Butée selon et la revendication 11, **caractérisée en ce que** la jupe supérieure cylindrique (36) fait saillie axialement vers le moyen d'appui inférieur (16).

**13.** Butée selon la revendication 10 et la revendication 12, **caractérisé en ce que** la jupe cylindrique supérieure (36) est au moins partiellement en regard et à distance de la jupe cylindrique inférieure (32).

**Patentansprüche**

**1.** Lager, Folgendes umfassend

- eine untere Scheibe (26), die eine untere Laufbahn bildet,
- eine obere Scheibe (24), die eine obere Laufbahn bildet,
- Kugeln (28), die auf der unteren und oberen Laufbahn rollen, um die Rotation der oberen (24) und unteren (26) Scheibe zueinander um eine geometrische Rotationsachse (XX) des Lagers zu gewährleisten,

wobei die Geometrie des Lagers dergestalt ist, dass in jeder Schnittebene, welche die geometrische Rotationsachse des Lagers (XX) enthält, die untere Laufbahn einen unteren Kreisbogen ($C_{Inf}$) bildet, der einen unteren axialen Krümmungsmittelpunkt ($O_{Inf}$) definiert, die obere Laufbahn einen oberen Kreisbogen ($C_{Sup}$) bildet, der einen oberen axialen Krümmungsmittelpunkt ($O_{Sup}$) definiert, **dadurch gekennzeichnet, dass**

der untere und obere Krümmungsmittelpunkt eine schräge geometrische Achse (ZZ) definieren, die mit der geometrischen Rotationsachse (XX) einen Schrägungswinkel ($\phi$) mit einem Wert zwischen 5° und 65° einschlägt, und

in jeder Schnittebene, welche die geometrische Rotationsachse des Lagers enthält, der untere Kreisbogen ($C_{Inf}$) zwei Enden aufweist, die einen Öffnungswinkel ($\phi_{Inf}$) mit einem Wert größer oder gleich 80° definieren, und eine Tangente, die sich auf einer unteren Ebene ($P_{Inf}$) senkrecht zur Rotationsachse in einem unteren Tangentialpunkt ($U_{Inf}$) befindet, die mit dem Ende des nächstgelegenen unteren Kreisbogens ($I_{Inf}$) einen Abschnitt des unteren Kreisbogens ($C_{Inf}$) definiert, der einen Öffnungswinkel ($\theta_{Inf\_I}$) größer oder gleich 10° aufweist.

**2.** Lager nach Anspruch 1, **dadurch gekennzeichnet, dass** in jeder Schnittebene, welche die geometrische Rotationsachse des Lagers enthält, der obere Kreisbogen ($C_{Sup}$) zwei Enden aufweist, die einen Öffnungswinkel ($\phi_{Sup}$) mit einem Wert größer oder gleich 80° definieren, und eine Tangente, die sich auf einer oberen Ebene ($P_{Sup}$) senkrecht zur Rotationsachse in einem oberen Tangentialpunkt ($U_{Sup}$) befindet, die mit dem Ende des nächstgelegenen oberen Kreisbogens ($I_{Sup}$) einen Abschnitt des oberen Kreisbogens ($C_{Sup}$) definiert, der einen Öffnungswinkel ($\theta_{Sup\_E}$) größer oder gleich 10° aufweist.

**3.** Lager nach einem der vorherigen Ansprüche, **dadurch gekennzeichnet, dass** die untere Scheibe (26) aus einem Blech, beispielsweise aus einem tiefgezogenen Blech gebildet wird.

**4.** Lager nach Anspruch 3, **dadurch gekennzeichnet, dass** die untere Scheibe (26) mit einer unteren zylindrischen Versteifungsschürze (32) versehen ist.

**5.** Lager nach einem der vorherigen Ansprüche, **dadurch gekennzeichnet, dass** die obere Scheibe (24) aus einem Blech, beispielsweise aus einem tiefgezogenen Blech gebildet wird.

**6.** Lager nach Anspruch 5, **dadurch gekennzeichnet, dass** die obere Scheibe mit einer oberen zylindrischen Versteifungsschürze (36) versehen ist.

**7.** Stützanschlag (10), die dazu bestimmt ist, zwischen eine Stützfeder (18) und die Karosserie eines Fahrzeugs eingeführt zu werden, wobei der Anschlag Folgendes umfasst:

- ein Lager (12) nach einem der vorherigen Ansprüche,
- ein unteres Auflagemittel (16) zum Übertragen der Kräfte auf die untere Scheibe des Lagers, die durch eine Tragfeder ausgeübt werden,
- einen Deckel (14) zum Übertragen der Kräfte auf die Karosserie des Fahrzeugs, die von der Feder ausgeübt werden und durch das Lager führen.

**8.** Anschlag nach Anspruch 7, **dadurch gekennzeichnet, dass** der Deckel (14) und das untere Auflagemittel (16) aus einem Kunststoff gebildet werden.

**9.** Anschlag nach Anspruch 7 oder Anspruch 8, **dadurch gekennzeichnet, dass** der Schrägungswinkel zum unteren Auflagemittel hin offen ist.

**10.** Anschlag nach einem der Ansprüche 7 bis 9, **dadurch gekennzeichnet, dass** die untere Scheibe (26) eine untere zylindrische Versteifungsschürze (32) umfasst, die radial am unteren Auflagemittel (16) anliegt.

**11.** Anschlag nach einem der Ansprüche 7 bis 10, **dadurch gekennzeichnet, dass** die obere Scheibe (24) eine obere zylindrische Versteifungsschürze (36) umfasst, die radial am Deckel (14) anliegt.

**12.** Anschlag nach und der Anspruch 11, **dadurch gekennzeichnet, dass** die obere zylindrische Versteifungsschürze (36) axial zum unteren Auflagemittel (16) hin vorsteht.

**13.** Anschlag nach Anspruch 10 und Anspruch 12, **dadurch gekennzeichnet, dass** sich die obere zylindrische Versteifungsschürze (36) zumindest teilweise gegenüber und auf Abstand zur unteren zylindrischen Versteifungsschürze (32) befindet.

**Claims**

**1.** Bearing comprising

- a lower washer (26) forming a lower race,
- an upper washer (24) forming an upper race,
- balls (28) rolling on the lower and upper races to carry out the relative rotation of the upper (24) and lower (26) washers about a geometric axis of rotation (XX) of the bearing,

the geometry of the bearing being such that any cross-section containing the geometric axis of rotation of the bearing (XX), the lower race forms a lower arc ($C_{Inf}$) which defines a lower centre of axial curvature ($O_{inf}$), the upper race forms an upper arc ($C_{Sup}$) which defines an upper centre of axial curvature ($O_{sup}$), **characterised in that** the lower and upper centres of curvature define an oblique geometric axis (ZZ) forming with the geometric axis of rotation (XX) an angle of inclination ($\Phi$) having a value between 5° and 65°, and
in any cross-section containing the geometric axis of rotation (XX) of the bearing, the lower arc ($C_{Inf}$) has two ends defining an opening angle ($\Phi_{Inf}$) having a value greater than or equal to 80° and a tangent situated in a lower plane ($P_{Inf}$) perpendicular to the axis of rotation at a lower tangent point ($U_{Inf}$) defining with the end of the nearest lower arc ($I_{inf}$) a portion of the lower arc ($C_{Inf}$) having an opening angle ($\theta_{Inf\_I}$) greater than or equal to 10°.

**2.** Bearing according to claim 1, **characterised in that** in any cross-section containing the geometric axis of rotation of the bearing, the upper arc ($C_{Sup}$) has two ends defining an opening angle ($\Phi_{sup}$) having a value greater than or equal to 80° and a tangent situated in an upper plane ($P_{Sup}$) perpendicular to the axis of rotation at an upper tangent point ($U_{Sup}$) defining with the end of the nearest upper arc ($I_{Sup}$) a portion of the upper arc ($C_{Sup}$) having an opening angle ($\theta_{Sup\_E}$) greater than or equal to 10°.

**3.** Bearing according to any one of the preceding claims, **characterised in that** the lower washer (26) is formed from a plate, for example an embossed plate.

**4.** Bearing according to claim 3, **characterised in that** the lower washer (26) is provided with a lower cylindrical stiffening skirt (32).

**5.** Bearing according to any one of the preceding claims, **characterised in** the upper washer (24) is formed from a plate, for example an embossed plate.

**6.** Bearing according to claim 5, **characterised in that** the upper washer is provided with an upper cylindrical stiffening skirt (36).

7.  Suspension stop (10) intended to be inserted between the suspension spring (18) and a vehicle body, the stop comprising:

    - a bearing (12) according to any one of the preceding claims,
    - a lower bearing means (16) for transmitting to the lower washer of the bearing the loads applied by a suspension spring,
    - a cover (14) for transmitting to the vehicle body the loads applied by the spring and passing through the bearing.

8.  Stop according to claim 7, **characterised in that** the cover (14) and the lower bearing means (16) are formed from a plastic material.

9.  Stop according to claim 7 or claim 8, **characterised in that** the angle of inclination is opened towards the lower bearing means.

10. Stop according to any one of claims 7 to 9, **characterised in that** the lower washer (26) includes a lower cylindrical stiffening skirt (32) radially bearing against the lower bearing means (16).

11. Stop according to any one of claims 7 to 10, **characterised in that** the upper washer (24) includes an upper cylindrical stiffening skirt (36) radially bearing against the cover (14).

12. Stop according to claim 11, **characterised in that** the upper cylindrical skirt (36) projects axially towards the lower bearing means (16).

13. Stop according to claim 10 and claim 12, **characterised in that** the upper cylindrical skirt (36) is at least partially facing and at a distance from the lower cylindrical skirt (32).

Fig. 1

EP 2 488 768 B1

Fig. 2

**EP 2 488 768 B1**

## RÉFÉRENCES CITÉES DANS LA DESCRIPTION

**Documents brevets cités dans la description**

- FR 2918138

- US 4696588 A1